Europäisches Patentamt

European Patent Office

Office européen des brevets

(11) Veröffentlichungsnummer: **0 571 869 A1**

## (12) EUROPÄISCHE PATENTANMELDUNG

(21) Anmeldenummer: **93108043.6**

(22) Anmeldetag: **17.05.93**

(51) Int. Cl.5: **C08G 64/30**

Geänderte Patentansprüche gemäss Regel 86 (2) EPÜ.

(30) Priorität: **29.05.92 DE 4217775**

(43) Veröffentlichungstag der Anmeldung:
**01.12.93 Patentblatt 93/48**

(84) Benannte Vertragsstaaten:
**BE DE ES GB IT NL**

(71) Anmelder: **BAYER AG**

**D-51368 Leverkusen(DE)**

(72) Erfinder: **Kühling, Steffen, Dr.**
**Scheiblerstrasse 83**
**W-4150 Krefeld(DE)**
Erfinder: **Alewelt, Wolfgang, Dr.**
**Stratumer Feld 17**
**W-4150 Krefeld 12(DE)**
Erfinder: **Kauth, Hermann, Dr.**
**Kolpingstrasse 34**
**W-4150 Krefeld 11(DE)**
Erfinder: **Freitag, Dieter, Dr.**
**Hasenheide 10**
**W-4150 Krefeld(DE)**

(54) **Verfahren zur Herstellung von Polycarbonaten.**

(57) Gegenstand der vorliegenden Erfindung ist ein Verfahren zur Herstellung von aromatischen Polycarbonaten in der Schmelze unter Verwendung von Fluoridkatalysatoren.

EP 0 571 869 A1

Gegenstand der vorliegenden Erfindung ist ein Verfahren zur Herstellung von aromatischen Polycarbonaten in der Schmelze aus Diphenolen und Kohlensäurediestern und gegebenenfalls Verzweigern und/oder Monophenolen bei Temperaturen von 100 °C bis 320 °C, vorzugsweise von 120 °C bis 300 °C und bei Drücken von 1 bar bis 0,01 mbar, vorzugsweise von 0,5 bar bis 0,05 mbar, in Gegenwart von Katalysatoren, das dadurch gekennzeichnet ist, daß als Katalysatoren Verbindungen der allgemeinen Formel $M^{\oplus}F_x^{\ominus}$ in Mengen von $10^{-8}$ Mol bis $10^{-1}$ Mol, vorzugsweise in Mengen von $10^{-7}$ Mol bis $10^{-2}$ Mol, pro Mol an eingesetztem Diphenol, verwendet werden, worin $M^{\oplus}$ ein Metallion, vorzugsweise ein Alkalimetall-, ein Erdalkalimetall-, oder ein Übergangsmetall-, oder ein quartäres Ammonium-oder ein quartäres Phosphonium-Ion ist und x jeweils der Wertigkeit der Kationen $M^{\oplus}$ entspricht.

Geeignete Kationen sind $Na^+$, $K^+$, $Rb^+$, $Cs^+$, $Ca^{2+}$, $Sr^{2+}$, $Ba^{2+}$, $N(CH_3)_4{}^+$ und $P(C_6H_5)_4{}^+$.

Die Herstellung von aromatischen Oligo-/Polycarbonaten nach dem Schmelzeumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964), den EP Anmeldungen 338 085, 360 578, 351 168, den JP-P 36-694, 36-13942, den US-P 4 330 664, 5 026 817 sowie der DP 1 031 512 vorbeschrieben.

In den obengenannten Literaturstellen und den dort zitierten Literaturangaben werden als Katalysatoren basische Alkali-, Erdalkali und Übergangsmetallhydroxide,-alkoholate, -carbonate, -acetate, -boranate, -hydrogenphosphate und -hydride beschrieben. Die Anwesenheit dieser basischen Verbindungen führen im Polycarbonat zu schlechten Hydrolyse- und Thermostabilitäten, die nur durch Zugabe von neutralisierenden Agenzien, wie beispielsweise in dem Bel.-P 677 424 beschrieben, beseitigt werden können.

Es wurde nun überraschenderweise gefunden, daß spezielle Metallfluoride, quartäre Ammoniumfluoride oder Phosphoniumfluoride als Katalysatoren für die Schmelzeumesterung von einer aromatischen Dihydroxyverbindung und einem Kohlensäurediester zur Herstellung von losungsmittelfreiem Polycarbonat geeignet sind. Die so hergestellten Polycarbonate zeigen überdies überraschenderweise eine sehr gute Hydrolysestabilität.

Erfindungsgemäß geeignete Katalysatoren sind beispielsweise: Lithiumfluorid, Natriumfluorid, Kaliumfluorid, Rubidiumfluorid, Caesiumfluorid, Magnesiumfluorid, Calciumfluorid, Bariumfluorid, Bleifluorid, Tetramethylammoniumfluorid, Tetraphenylphosphoniumfluorid.

Die erfindungsgemäß geeigneten Katalysatoren $M^{\oplus}F_x^{\ominus}$ können auch in Kombination (zwei oder mehrere) miteinander eingesetzt werden.

Für das erfindungsgemäße Verfahren geeignete Diphenole sind vorzugsweise solche mit 6 bis 30 C-Atomen, die einkernig oder mehrkernig sein können und alkylsubstituiert oder halogensubstituiert sein können. Als Beispiele seien Hydrochinon, Resorcin, Dihydroxydiphenylen, Bis-(hydroxyphenyl)-alkanen, Bis-(hydroxyphenyl)-cycloalkanen, Bis-(hydroxyphenyl)-sulfiden, Bis-(hydroxyphenyl)-ethern, Bis-(hydroxyphenyl)-ketonen, Bis-(hydroxyphenyl)-sulfonen, Bis-(hydroxyphenyl)-sulfoxiden, $\alpha,\alpha'$-Bis-(hydroxyphenyl)-diisopropylbenzolen, sowie deren kernalkylierte und kernhalogenierte Verbindungen genannt.

Bevorzugte Diphenole sind 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 4,4'-Dihydroxydiphenyl, 4,4'-Dihydroxydiphenylsulfid, 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-bis-(4-hydroxyphenyl)-cyclohexan und 1,1-Bis-(4-hydroxyphenyl)-3,3,5-trimethylcyclohexan.

Für das erfindungsgemäße Verfahren geeignete Verzweiger sind die für die Polycarbonatherstellung geeigneten 3- und mehr als 3-funktionellen Verbindungen, vorzugsweise solche mit 3 oder mehr als 3 phenolischen OH-Gruppen.

Beispiele für geeignete Verzweiger sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis(2-hydroxy-5'-methyl-benzyl)--4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäurester, Tetra-(4-hydroxyphenyl)-methan, Tetra-(4-(4-hydroxyphenyl-isopropyl)-phenoxy)-methan, 1,4-Bis-(4',4''-dihydroxytriphenyl)-methyl)-benzol und insbesondere $\alpha,\alpha',\alpha''$-Tris-(4-hydroxyphenyl)-1,3,4-triisoprenylbenzol. Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden Verzweiger werden in Mengen von 0,05 bis 2 Mol-%, bezogen auf Mole eingesetzte Diphenole, eingesetzt. Sie werden zusammen mit den Diphenolen in dem erfindungsgemäßen Verfahren umgesetzt.

Für das erfindungsgemäße Verfahren geeignete Kohlensäurediester sind Kohlensäurediarylester

Bei den Kohlesäurediestern ist, wie in den Beispielen geschildert, besonders das Diphenylcarbonat bevorzugt.

Bezogen auf 1 Mol Bisphenol werden die Kohlensäurediester in 1,01 bis 1,30 Mol, bevorzugt in 1,02 bis 1,15 Mol eingesetzt.

Die Durchführung des erfindungsgemäßen Verfahren erfolgt beispielsweise derart, daß in der ersten Stufe das Aufschmelzen der Diphenole und der Kohlensäurediester und gegebenenfalls der Verzweiger bei Temperaturen von 80°C bis 250°C, vorzugsweise von 100°C bis 230°C, besonders bevorzugt von 120°C bis 190°C unter normalem Druck in 0,1 bis 5 Stunden, bevorzugt in 0,25 bis 3 Stunden durchgeführt wird.

Dann wird durch Anlegen von Vakuum und Erhöhung der Temperatur durch Abdestillieren des Monophenols das Oligocarbonat aus der aromatischen Dihydroxyverbindung und dem Kohlensäurediester hergestellt. Im letzten Schritt wird bei der Polykondensation durch weiteres Erhöhen der Temperatur 240-320°C und bei einem Druck von < 2 mm Hg das Polycarbonat hergestellt.

Die Reaktion der aromatischen Dihydroxyverbindung und des Kohlensäurediesters kann, wie oben beschrieben, in einem kontinuierlichen oder diskontinuierlichen Verfahren durchgeführt werden.

Die nach dem erfindungsgemäßen Verfahren erhältlichen Polycarbonate sind Homopolycarbonate oder Copolycarbonate oder auch Mischungen von Polycarbonaten. Sie haben mittlere Gewichtsmittelmolekulargewichte $\overline{M}_w$ (ermittelt durch Messung der rel. Lösungsviskosität in $CH_2Cl_2$ oder in Mischungen gleicher Gewichtsmengen Phenol/o-Dichlorbenzol oder durch Lichtstreuung) von 15 000 bis 200 000, vorzugsweise von 19 000 bis 60 000.

Die Begrenzung der Molekulargewichte kann einerseits über die Menge an Kohlensäurediester sowie Temperatur und Druck der Reaktionsführung erfolgen, andererseits aber auch zusätzlich durch Zugabe von Monophenolen, beispielsweise Alkylphenolen, erreicht werden, wie dies beispielsweise in der EP-A- 0 360 578 beschrieben ist.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren, Fließhilfsmittel, Entformungsmittel, Brandschutzmittel, Pigmente, fein zerteilte Mineralien, Faserstoffe, z.B. Alkyl-und Arylphosphite, -phosphate-, phosphine, niedermolekulare Carbonsäureester, Halogenverbindungen, Salze, Kreide, Quarzmehl, Glas- und Kohlerstoffasern.

Weiterhin können den erfindungsgemäßen Polycarbonaten auch andere Polymere zugemischt werden, z.B. Polyolefine, Polyurethane oder Polystyrole.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH und Carbonsäure-Endgruppen, Polyphenylensulfid-Blöcke mit OH-Endgruppen, Polyphenylenoxid-Blöcke mit OH-Endgruppen.

Die nach dem erfindungsgemäßen Verfahren erhältlichen Polycarbonate sind wie die bekannten, auf dem Markt erhältlichen Polycarbonate zu beliebigen Formkörpern in bekannter Weise verarbeitbar, also beispielsweise zu Platten, Hohlkammerplatten oder Folien. Die nach dem erfindungsgemäßen Verfahren erhältlichen Polycarbonate sowie die daraus hergestellten Formkörper sind in bekannter Weise in der Optik, der Elektrotechnik, im Automobilsektor und im Bausektor einsetzbar.

Beispiele

Beispiel 1

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,00175 g ($2*10^{-3}$ Mol%) bezogen auf Bisphenol A $BaF_2$ als 0,1 %ige wäßriger Lösung zugegeben und das entstehende Phenol bei 100 mbar abdestilliert. Gleichzeitig wird die Temperatur bis auf 250°C gesteigert. Nach 1 Stunde wird das Vakuum auf 1 mbar verbessert. Durch Absenken des Vakuums auf 0,5 mbar und Temperaturerhöhung auf 280°C wird die Polykondensation erreicht. Man erhält ein farbhelles, lösungsmittelfreies Polycarbonat mit einer rel. Lösungsviskosität von 1,289 (Dichlormethan, 25°C, 5 g/l).

Beispiel 2

Wie in Beispiel 1, nur es werden 0,0015 g CsF ($2*10^{-3}$ Mol%) in 0,1 %iger wäßriger Lösung eingesetzt. Man erhält ein farbhelles, lösungsmittelfreies Polycarbonat mit einer rel. Lösungsviskosität von 1,337 (Dichlormethan, 25°C, 5 g/l).

Beispiel 3

Wie in Beispiel 1, nur es werden 0,00058 g KF ($2*10^{-3}$ Mol%) in 0,1 %iger wäßriger Lösung eingesetzt. Man erhält ein farbhelles, lösungsmittelfreies Polycarbonat mit einer rel. Lösungsviskosität von 1,398 (Dichlormethan, 25°C, 5g/l).

Beispiel 4

Wie in Beispiel 1, nur es werden 0,00042 g NaF ($2*10^{-3}$ Mol%) in 0,1 %iger wäßriger Lösung eingesetzt. Man erhält ein farbhelles, lösungsmittelfreies Polycarbonat mit einer rel. Lösungsviskosität von 1,277 (Dichlormethan, 25°C, 5g/l).

Beispiel 5

Wie in Beispiel 1, nur es werden 0,00164 g $N(CH_3)_4F$ ($5*10^{-3}$ Mol%) in 0,1 %iger wäßriger Lösung eingesetzt. Man erhält ein farbhelles, lösungsmittelfreies Polycarbonat mit einer rel. Lösungsviskosität von 1,236 (Dichlormethan, 25°C, 5g/l).

Beispiel 6

Wie in Beispiel 1, nur es werden 0,000656 g $N(CH_3)_4F$ ($2*10^{-3}$ Mol%) in 0,1 %iger wäßriger Lösung und 0,00058 g KF ($2*10^{-3}$ Mol%) in 0,1 %iger Lösung eingesetzt. Man erhält ein farbhelles, lösungsmittelfreies Polycarbonat mit einer rel. Lösungsviskosität von 1,336 (Dichlormethan, 25°C, 5 g/l).

Beispiel 7

Wie in Beispiel 1, nur es werden 0,00492 g $PbF_2$ ($4*10^{-3}$ Mol%) in 0,1 %iger wäßriger Lösung eingesetzt Man erhält ein farbhelles, lösungsmittelfreies Polycarbonat mit einer rel. Lösungsviskosität von 1,278 (Dichlormethan, 25°C, 5g/l).

Beispiel 8

Wie in Beispiel 1, nur es werden 0,00358 g $PPh_4F$ ($2*10^{-3}$ Mol%) in 0,1 %iger wäßriger Lösung eingesetzt. Man erhält ein farbhelles, lösungsmittelfreies Polycarbonat mit einer rel. Lösungsviskosität von 1,303 (Dichlormethan, 25°C, 5g/l).

Vergleichsbeispiel

Wie in Beispiel 1, nur es wird kein Katalysator eingesetzt. Man erhält ein Oligocarbonat mit einer rel. Lösungsviskositat von 1,090 (Dichlormethan, 25°C, 5g/l).

Beispiel 9

5 130 g (22,5 Mol) Bisphenol A, 5 152 g (24,075 Mol) Diphenylcarbonat und 75,6 mg Natriumfluorid ($8*10^{-3}$ Mol%) als 1 %ige waßrige Lösung) werden in einem 25 1 Rührbehälter eingewogen. Der Behälter wird mit Stickstoff inertisiert und die Rohstoffe werden in 15 Minuten auf 180°C erhitzt. Bei einer Massetemperatur von 100°C wird der Rührer eingeschaltet und ein Vakuum von 100 mbar angelegt. Die Temperatur wird eine Stunde bei 180°C gehalten und freigesetztes Phenol über eine Kolonne abdestilliert

4

Innerhalb einer weiteren Stunde wird die Temperatur auf 240°C erhöht und anschließend das Vakuum in 30 Minuten auf 10 mbar verbessert. Nach Erhöhung der Massetemperatur auf 290°C wird im hochvakuum (1 mbar) zwei Stunden polykondensiert und schließlich die Polykondensation bei 310°C in einer Stunde zu Ende geführt. Nach Belüften mit Stickstoff wird das Polycarbonat aus dem Kessel ausgetragen und granuliert.

Die relative Lösungsviskosität des isolierten Polycarbonats beträgt 1,300 (Dichlormethan, 25°C, 5 g/l).

Beispiel 10

Wie Beispiel 9, nur es werden 125,6 mg $N(CH_3)_4F$ ($6*10^{-3}$Mol%) anstatt des Natriumfluorids als 1 %iger wäßrige Lösung eingesetzt. Die relative Lösungsviskosität des isolierten Polycarbonats beträgt 1,294 (Dichlormethan, 25°C, 5 g/l).

Beispiel 11

Wie Beispiel 9, nur es werden 322,2 mg $PPh_4F$ ($4*10^{-3}$Mol%) anstatt des Natriumfluorids als 1 %iger wäßrige Lösung eingesetzt. Die relative Lösungsviskosität des isolierten Polycarbonats beträgt 1,283 (Dichlormethan), 25°C, 5 g/l).

Beispiel 12

Wie Beispiel 9, nur es werden 157,5 mg $BaF_2$ ($4*10^{-3}$Mol%) anstatt des Natriumfluorids als 1 %iger wäßrige Lösung eingesetzt. Die relative Lösungsviskosität des isolierten Polycarbonats beträgt 1,304 (Dichlormethan), 25°C, 5 g/l).

Beispiel 13 (Vergleichsbeispiel)

Wie Beispiel 9, nur es werden 29 mg Natriumphenolat ($1,14*10^{-3}$Mol%) anstatt des Natriumfluorids als 1 %iger wäßrige Lösung eingesetzt. Die relative Lösungsviskosität des isolierten Polycarbonats beträgt 1,276 (Dichlormethan), 25°C, 5 g/l).

Beispiel 14 (Vergleichsbeispiel)

Wie Beispiel 9, nur es werden 58 mg Natriumphenolat ($2,28*10^{-3}$Mol%) anstatt des Natriumfluorids als 1 %iger wäßrige Lösung eingesetzt. Die relative Lösungsviskosität des isolierten Polycarbonats beträgt 1,288 (Dichlormethan), 25°C, 5 g/l).

Beispiel 15 als Beweis für die verbesserte Hydrolysestabilität:

Die aus den Beispielen 9 bis 14 isolierten PC-Granulate werden zur Bestimmung der Hydrolysebeständigkeit in Wasser, das bei 100°C am Rückfluß kocht gelagert. Nach 100, 200 und 300 Stunden werden nun die rel. Lösungsviskositäten bestimmt. Die Ergebnisse sind nachstehender Tabelle zu entnehmen.

|  | Ausgangswert $eta_{rel}$ | $eta_{rel}$ 100h | $eta_{rel}$ 200h | $eta_{rel}$ 300h | $\Delta$ $eta_{rel}$ |
|---|---|---|---|---|---|
| PC aus Beispiel 9 | 1,300 | 1,294 | 1,290 | 1,283 | 0,017 |
| PC aus Beispiel 10 | 1,294 | 1,286 | 1,281 | 1,276 | 0,018 |
| PC aus Beispiel 11 | 1,283 | 1,278 | 1,271 | 1,266 | 0,017 |
| PC aus Beispiel 12 | 1,304 | 1,296 | 1,290 | 1,285 | 0,019 |
| PC aus Beispiel 13 | 1,276 | 1,260 | 1,254 | 1,248 | 0,028 |
| PC aus Beispiel 14 | 1,288 | 1,270 | 1,261 | 1,252 | 0,036 |

**Patentansprüche**

1. Verfahren zur Herstellung von aromatischem Polycarbonat in der Schmelze, dadurch gekennzeichnet, daß man mindestens eine aromatische Dihydroxyverbindung und einen Kohlensäurediester unter Zusatz eines Katalysators der Form $M^{\oplus}F_x^{\ominus}$ umsetzt, wobei $M^{\oplus}$ ein Metallion, quartäres Ammonium oder quartäres Phosphonium ist.

2. Verfahren zur Herstellung von aromatischem Polycarbonat in der Schmelze gemäß Anspruch 1, dadurch gekennzeichnet, daß der Katalysator, bezogen auf 1 Mol an eingesetztem Diphenol in $10^{-8}$ Mol bis $10^{-1}$ Mol eingesetzt wird.

3. Verfahren zur Herstellung von aromatischem Polycarbonat in der Schmelze gemäß Ansprüchen 1 und 2, dadurch gekennzeichnet, daß die Katalysatoren in Kombinationen miteinander eingesetzt werden.

4. Verfahren zur Herstellung von aromatischem Polycarbonat in der Schmelze gemäß Anspruch 1, dadurch gekennzeichnet, daß der Katalysator bezogen auf 1 Mol an eingesetztem Diphenol in $10^{-7}$ Mol bis $10^{-2}$ Mol eingesetzt wird.

5. Verfahren zur Herstellung von aromatischem Polycarbonat in der Schmelze gemäß Ansprüchen 1 bis 4, wobei $M = Na^+, K^+, Rb^+, Cs^+, Ca^{2+}, Sr^{2+}$ ist.

6. Verfahren zur Herstellung von aromatischem Polycarbonat in der Schmelze gemäß Ansprüchen 1 bis 4, wobei $M = Ba^{2+}$ ist.

7. Verfahren zur Herstellung von aromatischem Polycarbonat in der Schmelze gemaß Ansprüchen 1 bis 4, wobei $M = N(CH_3)_4^+$ ist.

8. Verfahren zur Herstellung von aromatischem Polycarbonat in der Schmelze gemäß Ansprüchen 1 bis 4, wobei $M = P(C_6H_5)_4^+$ ist.

9. Verfahren zur Herstellung von aromatischem Polycarbonat in der Schmelze gemäß Ansprüchen 1 bis 8, dadurch gekennzeichnet, daß man ein hydrolysestabiles Polycarbonat erhält.

**Geänderte Patentansprüche gemaß Regel 86 (2) EPÜ**

1. Verfahren zur Herstellung von aromatischem Polycarbonat in der Schmelze, dadurch gekennzeichnet, daß man mindestens eine aromatische Dihydroxyverbindung und einen Kohlensäurediester unter Zusatz von Katalysatoren der Form $M^{\oplus}F_x^{\ominus}$ umsetzt, wobei $M^{\oplus}$ ein Metallion, quartäres Ammonium oder quartäres Phosphonium ist und wobei die Katalysatoren in Kombination miteinander eingesetzt werden.

2. Verfahren zur Herstellung von aromatischem Polycarbonat in der Schmelze gemäß Anspruch 1, dadurch gekennzeichnet, daß der Katalysator, bezogen auf 1 Mol an eingesetztem Diphenol in $10^{-8}$ Mol bis $10^{-1}$ Mol eingesetzt wird.

3. Verfahren zur Herstellung vom aromatischem Polycarbonat in der Schmelze gemaß Anspruch 1, dadurch gekennzeichnet, daß der Katalysator bezogen auf 1 Mol an eingesetztem Diphenol in $10^{-7}$ Mol bis $10^{-2}$ eingesetzt wird.

4. Verfahren zur Herstellung von aromatischem Polycarbonat in der Schmelze gemäß Ansprüchen 1 bis 3, wobei das Metallion $Na^+, K^+, Rb^+, Cs^+, Ca^{2+}, Sr^{2+}$ ist.

5. Verfahren zur Herstellung von aromatischem Polycarbonat in der Schmelze gemäß Ansprüchen 1 bis 3, wobei das Metallion $Ba^{2+}$ ist.

6. Verfahren zur Herstellung von aromatischem Polycarbonat in der Schmelze, dadurch gekennzeichnet, daß man mindestens eine aromatische Dihydroxyverbindung und einen Kohlensäurediester unter Zusatz von Katalysatoren der Form $M^{\oplus}F_x^{\ominus}$ umsetzt, wobei $M^{\oplus}$ $N(CH_3)_4^+$ oder $P(C_6H_5)_4^+$ ist.

7. Verfahren zur Herstellung von aromatischem Polycarbonat in der Schmelze gemäß Anspruch 6, wobei $M^{\oplus}$ $N(CH_3)_4{}^+$ ist.

8. Verfahren zur Herstellung von aromatischem Polycarbonat in der Schmelze gemäß Anspruch 6, wobei $M^{\oplus}$ $P(C_6H_5)_4{}^+$ ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPI Week 9216, Derwent Publications Ltd., London, GB; AN 92-128597 & JP-A-4 072 327 (IDEMITSU PETROCHEM KK) 6. März 1992 | 1,2,4,9 | C08G64/30 |
| Y | * Zusammenfassung *  --- | 1-5,9 | |
| Y | US-A-4 782 131 (SWEENY) * Ansprüche 1-3 *  --- | 1-5,9 | |
| Y | US-A-3 457 239 (STEWART ET AL) * Ansprüche 1-2 *  --- | 1-5,9 | |
| A | DATABASE WPI Week 8906, Derwent Publications Ltd., London, GB; AN 89-044028 & JP-A-63 317 525 (MITSUI TOATSU CHEM. INC) 26. Dezember 1988 * Zusammenfassung *  --- | 1-5 | |
| A | FR-A-1 578 918 (INTYTUT TWORZYW SZTUCZNYCH)  --- | | RECHERCHIERTE SACHGEBIETE (Int. Cl.5)  C08G |
| A | US-A-3 312 662 (KURKJY ET AL)  ----- | | |

Der vorliegende Recherchenbericht wurde für alle Patentansprüche erstellt

| Recherchenort | Abschlußdatum der Recherche | Prüfer |
|---|---|---|
| DEN HAAG | 12 AUGUST 1993 | DECOCKER L. |